Europäisches Patentamt

European Patent Office

Office européen des brevets

(19)

(11) Veröffentlichungsnummer : **0 046 477**
**B1**

(12) **EUROPÄISCHE PATENTSCHRIFT**

(45) Veröffentlichungstag der Patentschrift :
25.07.84

(51) Int. Cl.³ : **B 01 F 15/00**

(21) Anmeldenummer : **81100414.2**

(22) Anmeldetag : **21.01.81**

(54) Vorrichtung zum Herstellen einer pastösen Mischung.

(30) Priorität : **12.08.80 DE 3030390**

(43) Veröffentlichungstag der Anmeldung :
**03.03.82 Patentblatt 82/09**

(45) Bekanntmachung des Hinweises auf die Patenterteilung : **25.07.84 Patentblatt 84/30**

(84) Benannte Vertragsstaaten :
**CH FR GB IT LI**

(56) Entgegenhaltungen :
**DE-A- 1 457 300**
**DE-B- 1 114 688**
**FR-A- 2 213 092**
**FR-A- 2 353 330**
**US-A- 4 197 018**

(73) Patentinhaber : **Haagen & Rinau**
**Dortmunder Strasse 5**
**D-2800 Bremen 1 (DE)**

(72) Erfinder : **Richter, Manfred, Ing. grad**
**Pfarrfeldsweg 43**
**D-2800 Bremen (DE)**

(74) Vertreter : **Hoormann, Walter, Dr.**
**FORRESTER & BOEHMERT Widenmayerstrasse 4/I**
**D-8000 München 22 (DE)**

## Beschreibung

Die Erfindung betrifft eine Vorrichtung zum Herstellen einer pastösen Mischung nach dem Oberbegriff des Hauptanspruchs.

Eine derartige Vorrichtung ist aus der FR-A-2 213 092 vorbekannt. Der in dieser Druckschrift vorbeschriebene Abstreifer ist jedoch derart ausgestaltet, daß er nur bei Drehung des Rührwerks in Richtung der Spitze des Abstreifers ein Ablösen von Material von der Behälterinnenwand ermöglicht, während bei entgegengesetzter Drehung des Rührwerks das Material von dem Abstreifer eher noch fester an die Behälterwand angepreßt wird.

Aus der DE-A 457 300 und der FR-A-2 353 330 ist dagegen eine Ausgestaltung des Abstreifers bekannt, bei der das Abstreifelement zwei entgegensetzt zueinander schräg auf die Innenwand zulaufende Abstreifkanten aufweist, was ein Ablösen von an der Innenwand anhaftendem Material bei Drehung des Rührwerks in beide Drehrichtungen ermöglicht. Eine derartige Ausgestaltung der Abstreifelemente hat jedoch den Nachteil, daß sich zwischen den beiden Kantenelementen der Abstreifer ein Totraum ergibt, in dem sich Material festsetzt und an dem Mischvorgang nicht teilnimmt. Das Ausbilden von Bereichen, in denen sich Material festsetzt, ohne am Mischvorgang beteiligt zu sein, ist jedoch grundsätzlich unerwünscht und in zahlreichen Anwendungsfällen, wie sie beispielsweise bei der pharmazeutischen Industrie vorliegen, völlig unakzeptabel.

Der Erfindung liegt daher die Aufgabe zugrunde, eine Vorrichtung der eingangs genannten Art zu schaffen, welche ein Ablösen der sich an der Innenwand des Kessels absetzenden Materialien unabhängig von der Drehungsrichtung des Rührwerks gewährleistet, ohne daß Toträume sich ausbilden, so daß das gesamte an der Innenwand des Mischkessels anbackende Material mit Sicherheit abgestreift und in den mehr zur Mitte des Mischkessels liegenden Innenraum zurückgeführt wird. Erfindungsgemäß wird diese Aufgabe gelöst durch die im Kennzeichen des Hauptanspruchs angegebenen Merkmale.

Bevorzugte Ausgestaltungen der vorliegenden Erfindung sind in den Unteransprüchen beschrieben.

Die Erfindung ist nachstehend an Ausführungsbeispielen unter Bezugnahme auf eine Zeichnung weiter erläutert. Es zeigt :

Figur 1 einen vertikalen Schnitt durch den Mischkessel einer erfindungsgemäßen Mischvorrichtung mit bereits in Stellung gebrachter Abstreifeinrichtung ;

Figur 2 eine vergrößerte Schnittdarstellung eines Abstreifers in Richtung der Schnittlinie II/III-II/III gesehen ;

Figur 3 eine Fig. 2 entsprechende Darstellung mit einer Variante eines Abstreifers, wobei sich der Abstreifer aufgrund seiner verglichen mit Fig. 2 umgekehrten Drehrichtung in einer anderen Betriebsstellung befindet ; und

Figur 4 einen vergrößerten Ausschnitt der Teildarstellung der Vorrichtung gemäß Fig. 1, die einen Teil eines Spoiler-Abstreifers zeigt.

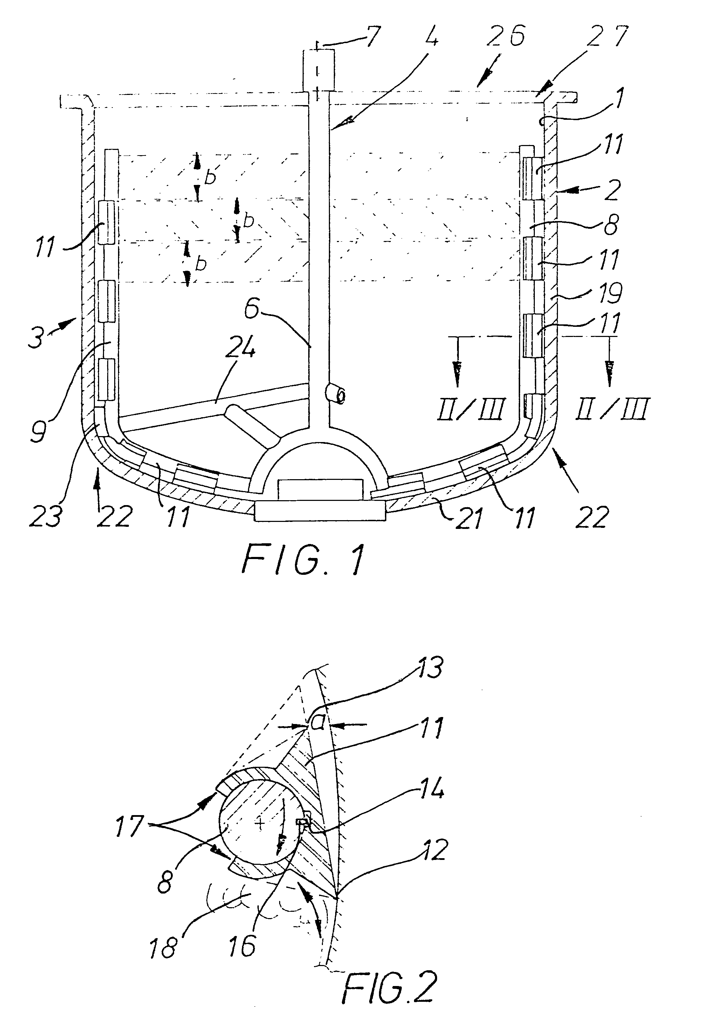

Fig. 1 zeigt in einem mittigen, vertikalen Längsschnitt den unteren Teil einer Vorrichtung zum Herstellen einer pastösen Mischung, also einer Vorrichtung zum Mischen wenigstens zweier Medien, von denen wenigstens eines — ebenso wie das letztlich erhaltene Mischprodukt — eine pastöse Konsistenz aufweist, wobei dieses Medium mithin aufgrund seiner Viskosität dazu neigt, an der Innenwandung 1 des Mischkessels 2 anzubacken.

Die im ganzen mit 3 bezeichnete Mischvorrichtung, von welcher in Fig. 1, wie bereits erwähnt, nur der untere Abschnitt in schematisierter Weise dargestellt ist, weist ein im ganzen mit 4 bezeichnetes Rührwerk auf, welches von einem nicht dargestellten Antrieb angetrieben ist, so daß sich die Rührwerkswelle 6 um ihre mit der Symmetrieachse der Mischvorrichtung 3 übereinstimmende Längsachse 7 dreht.

An der Rührwerkswelle 6 sitzen zwei diametral angeordnete Haltearme 8 und 9, die sich mithin zusammen mit der Rührwerkswelle 6 drehen. Die Haltearme 8, 9 verlaufen bei dem dargestellten Ausführungsbeispiel vertikal und parallel zur Innenwandung 1 des Mischkessels 2.

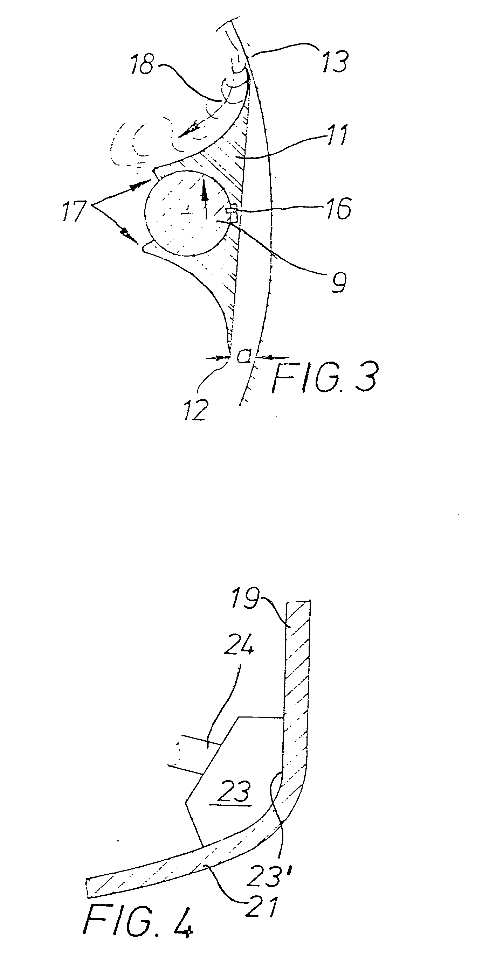

Die Haltearme 8, 9 dienen gleichzeitig als Haltearme für Abstreifer 11, auf die weiter unten noch eingegangen wird, wobei bereits an dieser Stelle darauf hingewiesen wird, daß ein gemäß der Schnittlinie II/III-II/III verlaufender Schnitt durch einen Abstreifer 11 in den Fig. 2 bzw. 3 der Zeichnung erkennbar ist.

Aus den Fig. 2 und 3 ist u.a. erkennbar, daß die Abstreifer 11 so ausgebildet bzw. (genauer gesagt) angeordnet sind, daß jeweils nur ihre eine (erste) Abstreifkante 12 (Fig. 2) bzw. 13 an der Innenwandung 1 des Mischkessels 2 anliegt bzw. anliegen kann, während die andere (zweite) Abstreifkante 13 (Fig. 2) bzw. 12 (Fig. 3) um einen Abstand a zur Innenwandung 1 des Mischkessels 2 steht.

Weiterhin ist aus den Fig. 2 und 3 erkennbar, daß jeder Abstreifer 11 seinen Haltearm 8 bzw. 9 wenigstens teilweise formschlüssig umgreift, wobei diese Umfassung sich über den Äquator der im Querschnitt kreisförmig ausgestalteten Haltearme 8, 9 erstreckt, so daß die Abstreifer 11 jeweils gleichsam clipartig auf ihren betreffenden Haltearm 8 bzw. 9 aufzuschieben sind.

Die Abstreifer 11 weisen jeweils eine schlitzförmige Ausnehmung 14 auf, in welche jeweils ein am betreffenden Haltearm 8 bzw. 9 fest angebrachter Stift 16 hineinragt, so daß die Abstreifer 11 aufgrund des Umstandes, daß die schlitzförmigen Ausnehmungen 14 jeweils etwa dem Durchmesser der Stifte 16 entsprechen, höhenmäßig an ihrem betreffenden Haltearm 8 bzw. 9 gehalten sind. Dabei sind die schlitzförmigen Ausnehmungen 14 so dimensioniert, daß ein Verschwenken der Abstreifkanten 12, 13 über den Bereich der am oberen Rand 26 des Mischkessels 2 vorgesehenen Anfasung 27 hinaus verhindert ist, die am weitesten radial außen liegenden Abstreifkanten 12, 13 also beim Einführen in den Mischkessel 2 im Bereich der Anfasung 27 liegen.

Die Abstreifer 11 sind jeweils an ihren beiden jeweils zwischen einer Abstreifkante 12 bzw. 13 und ihrem Befestigungsende 17 gelegenen Abschnitt ihrer Außenseite so ausgebildet, daß das von der Innenseite 1 des Mischkessels 2 abgestreifte Material 18 (Fig. 2 und 3) in den Kessel zurückzuführen ist, wobei dieses bei dem Ausführungsbeispiel gemäß Fig. 3 dadurch verwirklicht ist, daß jeweils zwischen der Abstreifkante und dem Befestigungsende der vorstehend angesprochene Bereich der Außenseite der Abstreifer 11 konkav ausgebildet ist, und zwar derart, daß die beiden konkaven Abschnitte eines Abstreifers 11 jeweils spiegelsymmetrisch zu der Symmetrieebene des Abstreifers 11 verlaufen, welche parallel zu den Abstreifkanten liegt.

Während die am Mantel 19 des Mischkessels 2 und am gekümpelten Boden 21 des Mischkessels 2 anliegenden Abstreifer 11 im wesentlichen gleich ausgebildet sind — wobei an dieser Stelle nochmals darauf verwiesen wird, daß sich in horizontaler Richtung im wesentlichen zueinander fluchtende Abstreifer 11 der beiden Haltearme 8 und 9 bezüglich ihres Abstreifbereiches b (s. Fig. 1) jeweils überlappen, da die entsprechenden Abstreifer 11 des einen Haltearmes 8 zu den Abstreifern 11 des anderen Haltearmes 9 höhenmäßig versetzt, jedoch einander überlappend angeordnet sind —, ergeben sich in den Übergangsbereichen 22 zwischen dem Mantel 19 und dem Boden 21 grundsätzlich zunächst einmal gewisse Schwierigkeiten, da in diesem abknickenden Bereich der Innenwandung 1 des Mischkessels 2 das erfindungsgemäße Schwenken der Abstreifer 11 in Abhängigkeit von ihrer relativen Drehrichtung zum Mischkessel 2 (und zwar ausgelöst durch den sich aufgrund der Viskosität des Mischgutes ergebenden Anpreßdruck des Mischgutes an die Abstreifer 11) gewisse Schwierigkeiten, weil dieser « Klappeffekt » in derartigen Knickbereichen zumindest nicht ohne weiteres funktioniert, wie sich aufgrund geometrischer Überlegungen von selbst ergibt.

Um diesen Schwierigkeiten zu begegnen, ist bei dem dargestellten Ausführungsbeispiel vorgesehen, daß jeweils einem mit Abstreifern 11 versehenen Haltearm 8, 9, also den Rührarmen des Rührwerkes, wenigstens ein den zwischen Mantel 19 und Boden 21 des Kessels 2 liegenden Innenwandungsabschnitt des Kessels 2 zugeordneter Spoiler-Abstreifer 23 zugeordnet ist, wobei die Spoiler-Abstreifer 23 ständig mit einer Abstreifkante 23' an der Innenwandung 1 des Mischkessels 2 anliegen.

Die Spoiler-Abstreifer 23 sind bevorzugt den Haltearmen 8 bzw. 9 vor- oder nachlaufend zugeordnet bzw. entsprechend angeordnet, wobei sie zwar grundsätzlich gemäß Fig. 1 beispielsweise an einem von der Rührwerkswelle 6 abzweigenden Querarm 24 befestigt sein können (s. a. Fig. 4), der am Rührwerk 4 gehalten ist, zweckmäßigerweise aber mittels einer geeigneten Halterung am Haltearm 8 bzw. 9 abgestützt sind, da auf diese Weise die eigentliche Rührarbeit des Rührwerkes 4 nicht gestört wird.

Sieht man beispielsweise einen ersten Spoiler-Abstreifer 23 vor, der im Übergangsbereich 22 stets mit einer der Abstreifkante 12 der Abstreifer 11 entsprechenden Abstreifkante 23' an der Innenwandung 1 des Mischkessels 2 anliegt, und an den zweiten Spoiler-Abstreifer 23, der mit seiner der Abstreifkante 13 der übrigen Abstreifer 11 entsprechenden Kante am Mischkessel 2 anliegt, so ist bei jeder Drehrichtung des Rührwerkes 4 um dessen Achse 7 sichergestellt, daß auch in dem kritischen Übergangsbereich 22 keine Totzonen auftreten.

Statt dessen können aber selbstverständlich ersichtlich auch die Spoiler-Abstreifer 23 wie die Abstreifer 11 in geeigneter Weise kippbar ausgebildet sein, wobei diese Kippbarkeit unter Berücksichtigung geeigneter Materialien wie bei den übrigen Abstreifern 11 funktioniert, wie weiter oben dargelegt ist.

## Ansprüche

1. Vorrichtung zum Herstellen einer pastösen Mischung, also zum Mischen wenigstens zweier Medien, von denen wenigstens eines eine pastöse Konsistenz aufweist, mit einem Rührwerk (4), dessen wenigstens eine Rührwerkswelle (6) sich in einen die zu mischenden Medien enthaltenen Mischkessel (2) erstreckt, wenigstens einem sich parallel zur Innenseite (1) des Mischkessels (2) erstreckenden Haltearm (8, 9), sowie wenigstens einem relativ zu diesem schwenkbarem Abstreifelement (11), das mit der Innenseite (1) des Mischkessels (2) zusammenwirkt und an seiner Außenseite so ausgebilder ist, daß das von der Innenseite (1) des Mischkessels (2) abgestreifte Material (18) in den mittleren Bereich des Mischkessels (2) selbsttätig zurückzuführen ist, dadurch gekennzeichnet, daß das Abstreifelement (11) an seinem der Innenseite (1) des Mischkessels (2) zugekehrten Endabschnitt zwei zueinander und zu der Kesselachse parallele Abstreifkanten (12, 13) aufweist, von denen jeweils nur die eine Abstreifkante (12, 13) an der Innenwandung (1) des Mischkessels (2) anliegt, während die andere Abstreifkante (13, 12) in einem Abstand (a) zur Innenwandung (1) des Mischkessels (2) steht, und daß das Abstreifelement (11) um einen Schwenkwinkel begrenzt schwenkbar ist, der ihm eine Anlage an der Innenseite (1) des Mischkessels (2) mit der einen Abstreifkante (12) oder der anderen Abstreifkante (13) gestattet.

2. Vorrichtung nach Anspruch 1, dadurch gekennzeichnet, daß die Abstreifelemente (11) den Haltearm (8, 9) wenigstens teilweise formschlüssig umgreifen.

3. Vorrichtung nach Anspruch 1 oder 2, dadurch gekennzeichnet, daß das Abstreifelement eine sich in Drehrichtung erstreckende schlitzförmige Ausnehmung aufweist, in welche ein am Haltearm (8, 9) fest angebrachter Stift (16) eingreift.

4. Vorrichtung nach einem oder mehreren der Ansprüche 1 bis 3, dadurch gekennzeichnet, daß die jeweils zwischen einer Abstreifkante (12, 13) und dem Befestigungsende (17) liegenden Außenseitenabschnitte des Abstreifelements (11) spiegelsymmetrisch konkav ausgebildet sind.

5. Vorrichtung nach einem oder mehreren der vorangehenden Ansprüche, dadurch gekennzeichnet, daß in an sich bekannter Weise mehrere Abstreifelemente (11) vorhanden sind.

6. Vorrichtung nach Anspruch 5, dadurch gekennzeichnet, daß mehrere Abstreifelemente (11) in an sich bekannter Weise übereinander an einem Haltearm (8, 9) angeordnet sind.

7. Vorrichtung nach Anspruch 5 oder 6, dadurch gekennzeichnet, daß wenigstens zwei winklig zueinander versetzte Haltearme (8, 9) vorhanden sind, an denen jeweils wenigstens ein Abstreifelement (11) gehalten ist.

8. Vorrichtung nach Anspruch 7, dadurch gekennzeichnet, daß die Abstreifelemente (11) des einen Haltearmes (8) zu den Abstreifelementen (11) des anderen Haltearmes (9) höhenmäßig versetzt angeordnet sind.

9. Vorrichtung nach Anspruch 8, dadurch gekennzeichnet, daß sich in horizontaler Richtung im wesentlichen zueinander fluchtende Abstreifelemente (11) zweier Haltearme (8, 9) bezüglich ihres Abstreifbereiches (b) überlappen.

10. Vorrichtung nach einem oder mehreren der vorangehenden Ansprüche, dadurch gekennzeichnet, daß einem mit einem Abstreifelement (11) versehenen Haltearm (8, 9) ein dem zwischen Mantel (19) und Boden (21) des Mischkessels (2) liegenden Innenwandungsabschnitt des Mischkessels (2) zugeordneter Spoiler-Abstreifer (23) zugeordnet ist, der mit einer Abstreifkante (23′) ständig an der Innenwandung (1) des Mischkessels (2) anliegt.

11. Vorrichtung nach Anspruch 10, dadurch gekennzeichnet, daß der Spoiler-Abstreifer (23) seinem Haltearm (8, 9) vor- oder nachlaufend zugeordnet ist.

12. Vorrichtung nach Anspruch 11, dadurch gekennzeichnet, daß der Spoiler-Abstreifer (23) am Haltearm (8, 9) gehalten ist.

13. Vorrichtung nach einem oder mehreren der vorangehenden Ansprüche, dadurch gekennzeichnet, daß der Mischkessel (2) an seinem oberen Rand (26) mit einer Anfasung (27) versehen ist.

14. Vorrichtung nach Anspruch 3 und 13, dadurch gekennzeichnet, daß die schlitzförmigen Ausnehmungen (14) so dimensioniert sind, daß ein Verschwenken der Abstreifkanten (12, 13) über den Bereich der Anfasung (27) hinaus verhindert ist.

**Claims**

1. Apparatus for making a pasty mixture, i. e. for mixing at least two media, at least one of which has a pasty consistency, comprising an agitator mechanism (4) whose at least one shaft (6) extends into a mixing vessel (2) containing the media for mixing, at least one holder arm (8, 9) extending parallel to the inside (1) of the vessel (2), and at least one stripper element (11) which is pivotable relatively to said arm and which cooperates with the inside (1) of the vessel (2) and the outside of which is so constructed that the material (18) stripped off the inside (1) of the vessel (2) is automatically returnable to the middle zone of the vessel (2), characterised in that the end portion of the stripper element (11) facing the inside (1) of the mixing vessel (2) has two stripper edges (12, 13) which are parallel to one another and to the vessel axis and of which at any time only one stripper edge (12, 13) bears against the inner wall (1) of the vessel (2) while the other stripper edge (13, 12) is at a distance (a) from the inner wall (1) of the vessel (2), and the stripper element (11) is pivotable to a restricted degree about a pivot angle allowing it to bear against the inside (1) of the vessel (2) by one stripper edge (12) or the other (13).

2. Apparatus according to claim 1, characterised in that the stripper elements (11) engage at least partially positively around the holder arm (8, 9).

3. Apparatus according to claim 1 or 2, characterised in that the stripper element has a recess in the form of a slot extending in the direction of rotation and having engaging therein a pin (16) fixed on the holder arm (8, 9).

4. Apparatus according to one or more of claims 1 to 3, characterised in that the outside portions of the stripper element (11) respectively situated between a stripper edge (12, 13) and the fixing end (17) are mirror-symmetrically concave.

5. Apparatus according to one or more of the preceding claims, characterised in that a plurality of stripper elements (11) are provided in manner known per se.

6. Apparatus according to claim 5, characterised in that a plurality of stripper elements (11) are disposed one above the other on a holder arm (8, 9) in manner known per se.

7. Apparatus according to claim 5 or 6, characterised in that there are at least two holder arms (8, 9) offset at an angle to one another, each holding at least one stripper element (11).

8. Apparatus according to claim 7, characterised in that the stripper elements (11) of one holder arm (8) are vertically offset from the stripper elements (11) of the other holder arm (9).

9. Apparatus according to claim 8, characterised in that stripper elements (11) disposed substantially in alignment with one another horizontally on two holder arms (8, 9) overlap in respect of their stripping zones (b).

10. Apparatus according to one or more of the preceding claims, characterised in that a spoiler

stripper (23) associated with the inner wall portion of the mixing vessel (2) situated between the casing (19) and the base (21) of the vessel is associated with a holder arm (8, 9) provided with a stripper element (11) and said spoiler stripper (23) bears continually by a stripper edge (23') against the inner wall (1) of the vessel (2).

11. Apparatus according to claim 10, characterised in that the spoiler stripper (23) is arranged so as to lead or lag with respect to its holder arm (8, 9).

12. Apparatus according to claim 11, characterised in that the spoiler stripper (23) is held on the holder arm (8, 9).

13. Apparatus according to one or more of the preceding claims, characterised in that the mixing vessel (2) has a chamfer (27) at its top edge (26).

14. Apparatus according to claims 3 and 13, characterised in that the recesses (14) in the form of slots are so dimensioned as to prevent the stripper edges (12, 13) from pivoting beyond the region of the chamber (27).

**Revendications**

1. Dispositif pour la préparation d'un mélange pâteux, donc pour le mélange d'au moins deux milieux, dont l'un au moins possède une consistance pâteuse, comportant un agitateur (4) dont au moins un arbre d'agitateur (6) s'étend dans un chaudron mélangeur (2) contenant les milieux à mélanger, au moins un bras-support (8, 9) s'étendant parallèlement à la face intérieure (1) du chaudron mélangeur (2), ainsi qu'au moins un élément racleur (11) pouvant pivoter par rapport audit bras (8, 9) et qui coopère avec la face intérieure (1) du chaudron mélangeur (2) et est agencé, sur sa face externe, de façon que la matière (18) raclée de la face interne du chaudron (2) soit ramenée automatiquement dans la zone médiane du chaudron (2) caractérisé par le fait que l'élément racleur (11) possède, sur sa section d'extrémité tournée vers la face intérieure (1) du chaudron (2), deux arêtes racleuses (12, 13) parallèles enre elles et à l'axe du chaudron, dont l'une seulement des arêtes (12, 13) s'applique contre la paroi interne (1) du chaudron (2) tandis que l'autre arête (13, 12) reste à une certaine distance (a) de la paroi interne (1) du chaudron (2) et l'élément racleur (11) peut pivoter, de manière limitée, d'un angle qui lui permet de s'appliquer contre la face interne (1) du chaudron (2) par l'une des arêtes racleuses (12) ou par l'autre (13).

2. Dispositif selon la revendication 1, caractérisé par le fait que les éléments racleurs (11) s'engagent par leur forme au moins partiellement sur le bras support (8, 9).

3. Dispositif selon la revendication 1 ou 2, caractérisé par le fait que l'élément racleur présente un évidement en forme de rainure s'étendant dans le sens de rotation et dans lequel s'engage une cheville (16) fixée au bras support (8, 9).

4. Dispositif selon l'une des revendications 1 à 3, caractérisé par le fait que les sections de la face externe de l'élément racleur (11), comprises entre une arête racleuse (12, 13) et l'extrémité de fixation correspondante (17), sont de forme concave, symétriques l'une de l'autre par rapport à un plan.

5. Dispositif selon l'une des revendications 1 à 4, caractérisé par le fait que, de manière connue en soi, sont prévus plusieurs éléments racleurs (11).

6. Dispositif selon la revendication 5, caractérisé par le fait que plusieurs éléments racleurs (11) sont disposés, de manière connue en soi, les uns au-dessus des autres sur un bras support (8, 9).

7. Dispositif selon la revendication 5 ou 6, caractérisé par le fait que sont prévus au moins deux bras supports (8, 9) décalés angulairement l'un par rapport à l'autre, et sur lesquels est retenu respectivement au moins un élément racleur (11).

8. Dispositif selon la revendication 7, caractérisé par le fait que les éléments racleurs (11) d'un des bras supports (8) sont disposés, décalés en hauteur par rapport aux éléments racleurs (11) de l'autre bras support (9).

9. Dispositif selon la revendication 8, caractérisé par le fait que les éléments racleurs (11) des deux bras supports (8, 9), sensiblement alignés en direction horizontale, se recouvrent en ce qui concerne leur zone de raclage (b).

10. Dispositif selon l'une des revendications 1 à 9, caractérisé par le fait qu'à un bras support (8) muni d'un élément racleur (11) est rattaché un racleur-spoiler (23) associé à la section de paroi intérieure du chaudron (2) située entre l'enveloppe (19) et le fond (21), et qui s'applique en permanence contre la paroi intérieure (1) du chaudron (2) par une arête racleuse (23').

11. Dispositif selon la revendication 10, caractérisé par le fait que le racleur-spoiler (23) est monté avec avance ou retard par rapport à son bras-support (8, 9).

12. Dispositif selon la revendication 11, caractérisé par le fait que le racleur-spoiler (23) est tenu par le bras-support (8, 9).

13. Dispositif selon l'une des revendications 1 à 12, caractérisé par le fait que le chaudron mélangeur (2) est muni sur son bord supérieur (26) d'un biseau (27).

14. Dispositif selon la revendication 3 et 13, caractérisé par le fait que les évidements (14), en forme de rainure, sont de dimensions telles qu'est empêché le pivotement des arêtes racleuses (12, 13) au-delà de la zone du biseau (27).

FIG. 1

FIG.2

FIG. 3

FIG. 4